# EUROPÄISCHE PATENTANMELDUNG

(11) **EP 1 183 922 A2**
(43) Veröffentlichungstag der Anmeldung: **06.03.2002**
(21) Anmeldenummer: 01120297.5
(22) Anmeldetag: 24.08.2001
(51) Int. Cl.: A01C 17/00

(54) **Schleuderdüngerstreuer**

(30) Priorität: 31.08.2000 DE 10042794
(71) Anmelder: Amazonen-Werke H. Dreyer GmbH & Co. KG, 49205 Hasbergen (DE)
(72) Erfinder: Dreyer, Heinz, Dr. Dipl.-Ing., 49205 Hasbergen (DE); Lührmann, Johannes, 49134 Wallenhost (DE)

(57) **Zusammenfassung**

Schleuderdüngerstreuer mit zumindest zwei rotierend angeordneten Schleuderscheiben, auf denen jeweils zumindest zwei rinnenförmig ausgebildete Wurfschaufeln unterschiedlicher Länge angeordnet sind, die eine aufrechte Rückwand aufweisen, wobei die Wurfschaufeln aus zwei in zumindest zwei verschiedene Positionen zueinander einstellbaren Teilen zum Erreichen unterschiedlicher Länge der Wurfschaufeln bestehen. Wobei in der Rückwand zumindest einer Wurfschaufel eine schlitzförmige Durchtrittsöffnung vorgesehen ist.

## Beschreibung

Die Erfindung betrifft einen Schleuderdüngerstreuer gemäß des Oberbegriffes des Patentanspruches 1.

Ein derartiger Schleuderdüngerstreuer ist in der EP 06 55 187 A1 beschrieben. Dieser Schleuderdüngerstreuer weist zwei Schleuderscheiben mit zwei unterschiedlich langen Teleskopschaufeln auf, die für einen kleineren Arbeitsbreitenbereich eingeschoben werden und für einen größeren Arbeitsbreitenbereich ausgezogen werden. Der erste Arbeitsbreitenbereich kann beispielsweise 10 bis 18 m betragen, während der zweite Arbeitsbereitenbereich 30 bis 36 m betragen kann.

In neuerer Zeit sind Forderungen aus der landwirtschaftlichen Praxis gestellt worden, einen Arbeitsbreitenbereiche von 18 bis zumindest 48 m abzudecken. Dieses soll nach Möglichkeit mit ein und denselben Schleuderscheiben, ohne die Wurfschaufeln oder die Schleuderscheiben auswechseln zu müssen, erreicht werden.

Nun haben Versuche gezeigt, dass mit einer Verlängerung der Wurfschaufellänge, um eine ausreichend große Wurfweite zur Erzielung von zumindest 48 m Arbeitsbreiten zu gewährleisten, mit den herkömmlichen Mitteln, wie sie der vorgenannte Stand der Technik offenbart, kein ausreichend gleichmäßiges Streubild erzielbar ist. Es sind zwar die Wurfweiten für Arbeitsbreiten bis zumindest 48 m erreichbar, jedoch ergeben sich im Streubild sehr große "Täler" und "Berge"; d.h., dass ein sehr ungleichmäßiges Streubild sich ergibt.

Der Erfindung liegt die Aufgabe zugrunde, mit einfachen Maßnahmen einen Arbeitsbreitenbereich von 18 bis 48 m mit einem teleskopierbaren Wurfschaufelsatz abdecken zu können.

Diese Aufgabe wird erfindungsgemäß durch die kennzeichnenden Merkmale des Patentanspruches 1 gelöst. Infolge dieser Maßnahmen werden sowohl in dem unteren wie auch in dem oberen Arbeitsbreitenbereich jeweils in überraschender Weise über den gesamten Arbeitsbreitenbereich ausreichend gleichmäßige Streubilder bei der Ausbringung unterschiedlichster Düngersorten erreicht. Durch die Durchtrittsöffnungen kann ein Teil des Düngers die Wurfschaufeln vor dem Ende des eigentlichen äußeren Abwurfendes der Wurfschaufeln bereits verlassen und die sich ohne die Öffnungen entstehenden "Täler" auffüllen. Dieser abgeleitete Dünger wird aus dem Bereich abgezogen, wo an sich mit Wurfschaufeln ohne Öffnungen Berge im Streubild entstehen würden. Durch diese Öffnungen wird also in völlig überraschender und einfacher Weise eine gute Vergleichmäßigung des Streubildes erzielt.

Besonders hat sich die Ausgestaltung der Wurfschaufeln gemäß der kennzeichnenden Merkmale des Anspruches 2 bewährt. Diese Ausgestaltung zeigt die größte Bandbreite für verschiedene Düngersorten mit einer in der Praxis auch bei problematischem Düngern immer ausreichend guter Streugleichmäßigkeit

In bevorzugter Weise ist vorgesehen, dass die schlitzförmigen Durchtrittsöffnungen derart angeordnet sind bzw. die Rückwände, in denen sich die schlitzförmigen Durchtrittsöffnungen nicht befinden, Mittel aufweisen, dass jeweils in der eingeschobenen Position des äußeren Teiles die Durchtrittsöffnung unverdeckt erhalten bleibt. Hierbei hat sich gezeigt, dass mittels dieser Öffnungen in den Rückwänden der Wurfschaufeln die Gleichmäßigkeit erzielt wird.

Es kann jedoch auch vorgesehen sein, dass nach dem Einschieben der äußeren Teile zumindest einige der schlitzförmigen Durchtrittsöffnungen teilweise abdeckbar sind. Dieses kann insbesondere bei problematischen Düngern Vorteile bieten. Diese Variante wird man dann zu wählen sein, wenn überwiegend dieser problematischen Dünger ausgebracht werden müssen.

Um in jedem Falle zumindest Arbeitsbreiten bis 48 m auch mit Düngern, die evtl. schlechtere Flugeigenschaften aufweisen, zu erreichen, ist vorgesehen, dass die untere Leitfläche der Wurfschaufeln im äußeren Bereich einen Abwurfwinkel von 10° bis 20°, vorzugsweise 16° zur Horitzontalen aufweisen.

Um den Schleuderstreuer in einfacher Weise von Normal- auf Spätdüngung umrüsten zu können, ist vorgesehen, dass die Wurfschaufeln an ihren äußeren Enden verstellbare Leitflächen zur Änderung des Abwurfwinkels aufweisen.

Gemäß Versuche ist vorgesehen, dass die schlitzförmige Durchtrittsöffnung im inneren Teil der längeren Wurfschaufel eine Länge von 35 bis 40 mm, vorzugsweise 38 mm und eine Höhe von 8 bis 10 mm, vorzugsweise von 9 mm aufweist, dass der Beginn der Durchtrittsöffnung einen Abstand von 250 bis 300 mm, vorzugsweise von 270 mm zur Drehachse der Schleuderscheibe aufweist, dass die Durchtrittsöffnung in dem äußeren Teil der kürzeren Wurfschaufeln eine Länge von 40 bis 60 mm, vorzugsweise von 50 mm und eine Höhe von 15 bis 20 mm, vorzugsweise 18 mm aufweist, wobei das Ende der Durchtrittsöffnung einen Abstand von 50 bis 90 mm, vorzugsweise 70 mm zur Abwurfkante aufweist.

Als vorteilhaft hat sich gezeigt, dass die Höhe der Durchtrittsöffnungen in der längeren Wurfschaufel etwa ¼ der Höhe der Rückwand und in der kürzeren Wurfschaufel etwa ¼ der Höhe der Rückwand betragen sollte.

In vorteilhafter Weise ist vorgesehen, dass die lange Wurfschaufel in eine Position ausziehbar ist, in welcher die Abstreukante einen Abstand zur Drehachse von 500 bis 600 mm, vorzugsweise 548 mm aufweist und auf eine Position einschiebbar ist, in welcher die Abstreukante einen Abstand von 400 bis 500 mm, vorzugsweise 456 mm zur Drehachse aufweist, dass die kurze Wurfschaufel in eine Stellung ausziehbar ist, in welcher die Abstreukante einen Abstand von 300 bis 400 mm, vorzugsweise 356 mm zur Drehachse der Wurfschaufel aufweist, und in eine Position einschiebbar ist, in welcher die Abstreukante einen Abstand zur Drehachse von 280 bis 360 mm, vorzugsweise 321 mm aufweist, und dass die Schleuderscheiben mit einer Drehzahl von 650 bis 800 vorzugsweise 720 U/min antreibbar sind.

Wenn im vorstehenden der Abstand von der Drehachse der Schleuderscheibe angegeben ist und wenn die Wurfschaufeln auf der Schleuderscheibe winkelverschenkbar in unterschiedlichen Winkelanstellungen in Scheibenebene einstellbar sind, wird von einer mittleren Winkeleinstellung der Wurfschaufeln ausgegangen.

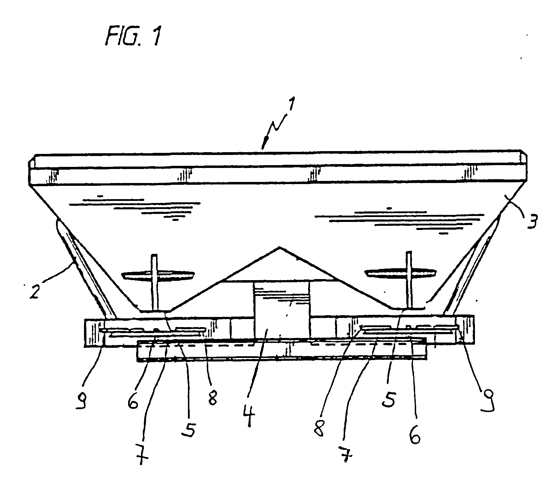

Weitere Einzelheiten der Erfindung sind der Beispielsbeschreibung und den Zeichnungen zu entnehmen. Hierbei zeigen
- Fig. 1: den Schleuderdüngerstreuer in der Ansicht von hinten und in Prinzipdarstellung,
- Fig. 2: die linke Schleuderscheibe des Schleuderstreuers mit ausgezogenen Wurfschaufeln in der Draufsicht, in vergrößertem Maßstab, sowie in Prinzipdarstellung,
- Fig. 3: die Schleuderscheibe gemäß Fig. 2 in der Seitenansicht,
- Fig. 4: die Schleuderscheiben mit den Wurf schaufeln in eingeschobener Position und
- Fig. 5: Schleuderscheibe gemäß Fig. 4 in Seitenansicht.

Der Schleuderdüngerstreuer 1 ist mit dem Rahmen 2 ausgestattet, an dem der Vorratsbehälter 3 und der Antriebsstrang 4 angebracht sind. Hierbei ist der untere Bereich des Vorratsbehälters 3 durch ein dachförmiges Mittelteil in zwei Auslauftrichtern unterteilt, in deren unteren Bereich sich die einstellbaren Dosierorgane 5 zur Einstellung der Ausbringmenge befindet. Unterhalb der Dosierorgane 5 sind quer zur Fahrtrichtung auf den Ausgangswellen 6 des Antriebsstranges die beiden Schleuderscheiben 7 nebeneinander beabstandet zueinander angeordnet. Auf diesen Schleuderscheiben 7 sind jeweils die kürzere Wurfschaufel 8 und die längere Wurfschaufel 9 befestigt. Die Befestigung der Schleuderscheiben 7 auf den Ausgangswellen 6 ist derart ausgebildet, dass sich die Schleuderscheiben 7 vorzugsweise werkzeuglos auf diesen Ausgangswellen 6 montieren lassen bzw. von den Ausgangswellen 6 demontieren lassen. Die Wurfschaufeln 8 und 9 sind mittels der Bolzen 10 und 11 winkelverschwenkbar und in unterschiedlichen Positionen einstellbar auf den Schleuderscheiben 7 befestigt.

Die rotierend angetriebenen Schleuderscheiben 7 verteilen mit den Wurfschaufeln 8 und 9 den auf die jeweilige Schleuderscheibe 7 auftreffenden Düngemittelstrom gleichmäßig über die genau einstellbare Arbeitsbreite des Düngerstreuers. Die Schleuderscheiben 7 rotieren im entgegengesetzten Drehsinn zueinander.

Auf den Schleuderscheiben 7 sind, wie bereits erwähnt, jeweils eine kürzere Wurfschaufel 8 und eine längere Wurfschaufel 9 winkelverschwenkbar befestigt. Die kürzere Wurfschaufel 8 besteht aus dem inneren Teil 8' und dem äußeren Teil 8", während die längere Wurfschaufel 9 aus dem inneren Teil 9' und dem äußeren Teil 9" besteht. Die kürzere Wurfschaufel 8 und die längere Wurfschaufel 9 sind aufgrund ihrer teleskopartigen Ausbildung in eine längere und eine kürzere Position einstellbar. Mittels des Festsetzmechanismus 12 lassen sich die Teile 9',9'' genau zueinander einstellen, während die Teile 8' und 8" mittels des als Festsetzmechanismus wirkenden äußeren Bolzen 11 zueinander eingestellt werden.

An den äußeren Teilen können untere verschwenkbare Leitflächen angeordnet sein, so dass unterschiedliche Abflugrichtungen zur Horizontalen eingestellt werden können. Somit lässt sich in einfacher Weise der Schleuderdüngerstreuer von Normaldüngung auf Spätdüngung umgedreht umstellen.

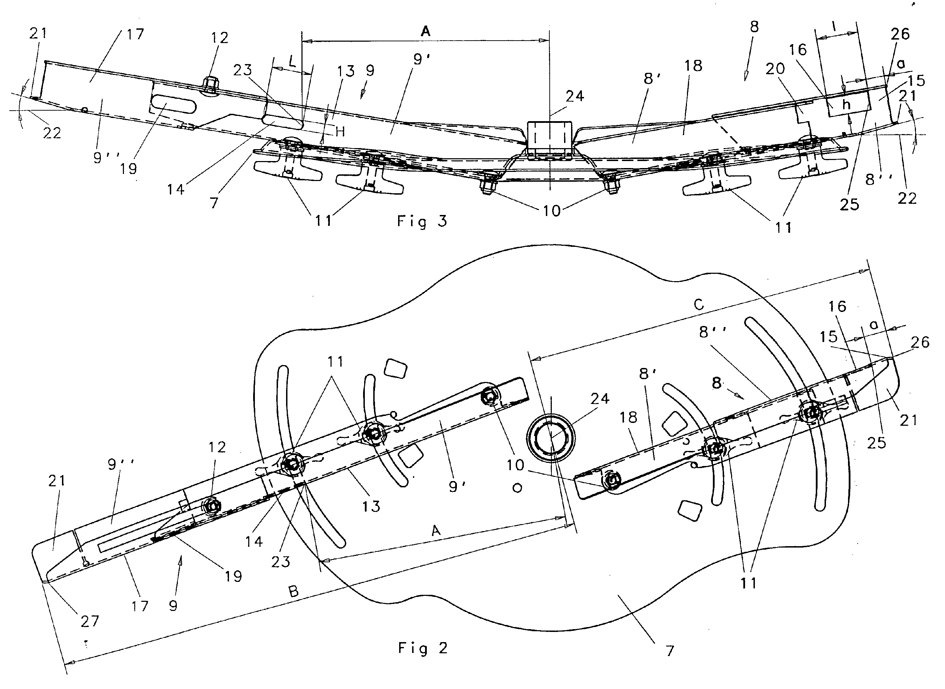

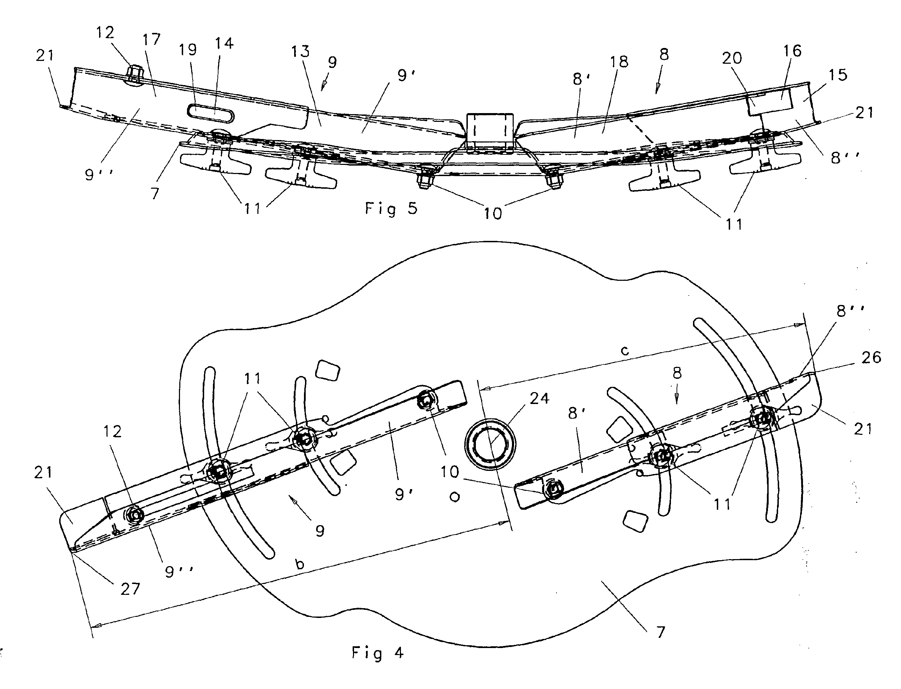

In den in den Fig. 2 bis 3 dargestellten Positionen sind die Wurfschaufeln 8 und 9 in ihre längere Position eingestellt, während sie in den Fig. 4 und 5 in ihrer eingeschobenen Position eingestellt sind. In der eingeschobenen Position wird die Maschine für Arbeitsbreiten von etwa 21 bzw. 24 m eingesetzt, während die Maschine, wenn die Wurfschaufeln 8 und 9 in der ausgezogenen Position gemäß Fig. 2 und 3 eingesetzt werden, einen Arbeitsbreitenbereich von bis zu 48 m erreicht.

Um für alle Düngersorten mittels dieser teleskopartig ausziehbar und einschiebbaren Wurfschaufeln 8 und 9 eine gleichmäßige Düngerverteilung erzielen zu können, ist in der Rückwand 13 des inneren Teiles 9' der längeren Wurfschaufeln 9 eine schlitzförmige Durchtrittsöffnung 14 angeordnet, während in der Rückwand 15 des äußeren Teiles 8'' der kürzeren Wurfschaufel 8 die schlitzförmige Durchtrittsöffnung 16 angeordnet ist. Die schlitzförmigen Durchtrittsöffnungen 14,16 bzw. die Rückwände 17,18, in denen sich die schlitzförmigen Durchtrittsöffnungen 14,16 nicht befinden, sind so ausgestattet, dass jeweils in der eingeschobenen Position des äußeren Teiles 8",9" die Durchtrittsöffnungen 14,16 unverdeckt bleiben, wie die Zeichnung gemäß Fig. 4 und 5 zeigen. Um dieses zu erreichen, weist die Rückwand 17 die Aussparung 19 und die Rückwand 17 und die Rückwand 18 die Öffnung 20 auf. In der eingeschobenen Position des äußeren Teiles 9'der längeren Wurfschaufel 9 kommt die Durchtrittsöffnung 16 in den äußeren Teil 9" mit der Öffnung 20 in dem inneren Teil 9'zur Deckung, so dass die Durchtrittsöffnung 16 auch in der eingeschobenen Position erhalten bleibt.

Es kann jedoch auch durchaus eine Ausführungsvariante geben, dass nach dem Einschieben der äußeren Teile zumindest einige der schlitzförmigen Durchtrittsöffnungen abgedeckt werden können.

Die untere Leitfläche 21 der Wurfschaufeln 8 und 9 weist zumindest im äußeren Bereich eine derartige Einstellung auf, dass ein Abwurfwinkel α von 10° bis 20°, vorzugsweise 16° zur Horizontalen 22 erreichbar ist.

Die schlitzförmige Durchtrittsöffnung 14 im inneren Teil der längeren Wurfschaufel 9 weist eine Länge L von 35 bis 40 mm, vorzugsweise 38 mm und eine Höhe H von 8 bis 10 mm, vorzugsweise von 9 mm auf. Der Beginn 23 der Durchtrittsöffnung 14 weist einen Abstand A von 250 bis 300 mm, vorzugsweise von 270 mm zur Drehachse 24 zur Schleuderscheibe 7 auf. Dieser Abstand A ist angegeben bei einer mittleren Winkelanstellung der Wurfschaufel 9. Die Durchtrittsöffnung 16 in dem äußeren Teil 8" der kürzeren Wurfschaufel 8 weist eine Länge l von 40 bis 60 mm, vorzugsweise von 50 mm, vorzugsweise eine Höhe h von 15 bis 20 mm, vorzugsweise 18 mm auf, wobei das Ende 25 der Durchtrittsöffnung 16 einen Abstand 26 von 50 bis 60 mm, vorzugsweise 70 mm zu der Abwurfkante aufweist. Die Höhe H der Durchtrittsöffnung 19 in der längeren Wurfschaufel 9 beträgt etwa ¼ der Höhe der Rückwand 13 und in der kürzeren Wurfschaufel 8 beträgt die Höhe h der Durchtrittsöffnung 16 etwa ½ der Höhe der Rückwand 15.

Die lange Wurfschaufel 9 ist in eine Position ausziehbar, in welcher die Abstreukante 27 einen Abstand B zur Drehachse 24 von 500 bis 600 mm, vorzugsweise 548 mm aufweist und auf eine Position einschiebbar ist, in welcher die Abstreukante 27 einen Abstand b von 400 bis 500 mm, vorzugsweise 456 mm zur Drehachse 24 aufweist. Die kurze Wurfschaufel 8 ist in eine Stellung ausziehbar, in welcher die Abstreukante 26 einen Abstand C von 300 bis 400 mm, vorzugsweise 356 mm zur Drehachse 24 der Scheibe 7 aufweist und in eine Position einschiebbar ist, in welcher die Abstreukante 26 einen Abstand C zur Drehachse 24 von 280 mm bis 360 mm, vorzugsweise 321 mm aufweist. Die Schleuderscheiben 7 werden in bevorzugter Weise mit einer Drehzahl von 650 bis 800, vorzugsweise 720 U/min angetrieben.

Die o. g. Abstände A,a,B,b,C,c beziehen sich grundsätzlich auf eine mittlere Winkeleinstellungsposition der Wurfschaufeln 8 und 9.

## Patentansprüche

1. Schleuderdüngerstreuer mit zumindest zwei rotierend angeordneten Schleuderscheiben, auf denen jeweils zumindest zwei rinnenförmig ausgebildete Wurfschaufeln unterschiedlicher Länge angeordnet sind, die eine aufrechte Rückwand aufweisen, wobei die Wurfschaufeln aus zwei in zumindest zwei verschiedene Positionen zueinander einstellbaren Teilen zum Erreichen unterschiedlicher Länge der Wurfschaufeln bestehen, **dadurch gekennzeichnet, dass** in der Rückwand (13,15) zumindest einer Wurfschaufel (8,9)eine schlitzförmige Durchtrittsöffnung (14,16) vorgesehen ist.

2. Schleuderdüngerstreuer nach Anspruch 1, **dadurch gekennzeichnet, dass** in der Rückwand (13) des inneren Teiles (9') der längeren Wurfschaufel (9) eine schlitzförmige Durchtrittsöffnung (14) vorgesehen ist, und dass in der Rückwand (15) des äußeren Teiles (8")der kürzeren Wurfschaufel (8) ebenfalls eine schlitzförmige Durchtrittsöffnung (16) vorgesehen ist.

3. Schleuderdüngerstreuer nach Anspruch 1, **dadurch gekennzeichnet, dass** die schlitzförmigen Durchtrittsöffnungen (14,16) derart angeordnet sind bzw. die Rückwände (17,18), in denen sich die schlitzförmige Durchtrittsöffnung (14,16) nicht befinden Mittel so aufweisen, dass jeweils in der eingeschobenen Position des äußeren Teiles (8",9") die Durchtrittsöffnung (14,16) unverdeckt erhalten bleiben.

4. Schleuderdüngerstreuer nach Anspruch 1, **dadurch gekennzeichnet, dass** nach dem Einschieben der äußeren Teile zumindest einige der schlitzförmigen Durchtrittsöffnungen zumindest teilweise abdeckbar sind.

5. Schleuderdüngerstreuer nach einem oder mehreren der vorstehenden Ansprüche, **dadurch gekennzeichnet, dass** die untere Leitfläche (26) der Wurfschaufeln (8,9) im äußeren Bereich einen Abwurfwinkel (α) von 10° bis 20°, vorzugsweise 16° aufweisen.

6. Schleuderdüngerstreuer nach einem oder mehreren der vorstehenden Ansprüche, **dadurch gekennzeichnet, dass** die Wurfschaufeln (8,9) an ihren äußeren Enden verstellbare Leitflächen (26) zur Änderung des Abwurfwinkels (α) aufweisen.

7. Schleuderdüngerstreuer nach einem oder mehreren der vorstehenden Ansprüche, **dadurch gekennzeichnet, dass** die schlitzförmige Durchtrittsöffnung (14) im inneren Teil (9') der längeren Wurfschaufel (9) eine Länge (L) von 35 bis 40 mm, vorzugsweuse 38 mm und eine Höhe (H) von 8 bis 10 mm, vorzugsweise von 9 mm aufweist, dass der Beginn (23) der Durchtrittsöffnung (14) einen Abstand (A) von 250 bis 300 mm, vorzugsweise von 270 mm zur Drehachse (24) der Schleuderscheibe (7) aufweist, dass die Durchtrittsöffnung (16) in dem äußeren Teil (8") der kürzeren Wurfschaufeln (8) eine Länge (1) von 40 bis 60 mm, vorzugsweise von 50 mm und eine Höhe (h) von 15 bis 20 mm, vorzugsweise 18 mm aufweist, wobei das Ende (25) der Durchtrittsöffnung (16) einen Abstand (a) von 50 bis 90 mm, vorzugsweise 70 mm zur Abwurfkante (26) aufweist.

8. Schleuderdüngerstreuer nach Anspruch 1, **dadurch gekennzeichnet, dass** die Höhe (H) der Durchtrittsöffnung in der längeren Wurfschaufel (9) etwa ¼ der Höhe der Rückwand (13) und die Höhe (h) der Durchtrittsöffnung (16) in der kürzeren Wurschaufel (9) etwa ½ der Höhe der Rückwand (15) beträgt.

9. Schleuderdüngerstreuer nach einem oder mehreren der vorstehenden Ansprüche, **dadurch gekennzeichnet, dass** die lange Wurfschaufel (9) in eine Position ausziehbar ist, in welcher die Abstreukante (27) einen Abstand (B) zur Drehachse von .500 bis 600 mm, vorzugsweise 548 mm aufweist und auf eine Position einschiebbar ist, in welcher die Abstreukante (27) einen Abstand (b) von 400 bis 500 mm, vorzugsweise 456 mm zur Drehachse (24) aufweist, dass die kurze Wurfschaufel (8) in eine Stellung ausziehbar ist, in welcher die Abstreukante (26) einen Abstand (C) von 300 bis 400 mm, vorzugsweise 356 mm zur Drehachse (24) der Wurfschaufel (8) aufweist, und in eine Position einschiebbar ist, in welcher die Abstreukante (26) einen Abstand (C) zur Drehachse (24) von 280 bis 360 mm, vorzugsweise 321 mm aufweist, und dass die Schleuderscheiben (7) mit einer Drehzahl von 650 bis 800 vorzugsweise 720 U/min antreibbar sind.
